# EUROPEAN PATENT APPLICATION

(11) **EP 2 400 676 A1**
(43) Date of publication of application: **28.12.2011**
(21) Application number: 10769331.9
(22) Date of filing: 28.04.2010
(51) Int. Cl.: H04B 7/26

(54) **RELAY NODE, BASE STATION AND METHOD FOR RECEIVING AND TRANSMITTING SYSTEM BROADCAST INFORMATION**

(30) Priority: 28.04.2009 CN 200910137505
(71) Applicant: ZTE Corporation, Shenzhen, Guangdong 518057 (CN)
(72) Inventor: CHEN, Si, Guangdong 518057 (CN); HE, Feng, Guangdong 518057 (CN)
(74) Representative: Raunecker, Klaus Peter
(86) International application number: PCT/CN2010/072309
(87) International publication number: WO 2010/124642

(57) **Abstract**

The present invention discloses a Relay-Node (RN), a Donor-eNB and a method for the RN to receive and send system information, which avoid a conflict between simultaneously receiving system information by the RN from the donor-eNB and sending system information to a UE by the RN. The method comprises: setting an offset between a radio frame border of the RN and a radio frame border of a Donor-eNB by the Donor-eNB or the RN itself, so that the radio frame border of the RN is staggered from the radio frame border of the Donor-eNB; receiving and sending system information by the RN according to a sending period specified in a Long Term Evolution (LTE); so as to avoid a conflict between receiving and sending the system information by the RN.

## Description

### TECHNICAL FIELD

The present invention relates to the field of wireless communications, and in particular to a Relay-Node (RN), a Donor-eNB and a method for the RN to receive and send system information.

### BACKGROUND

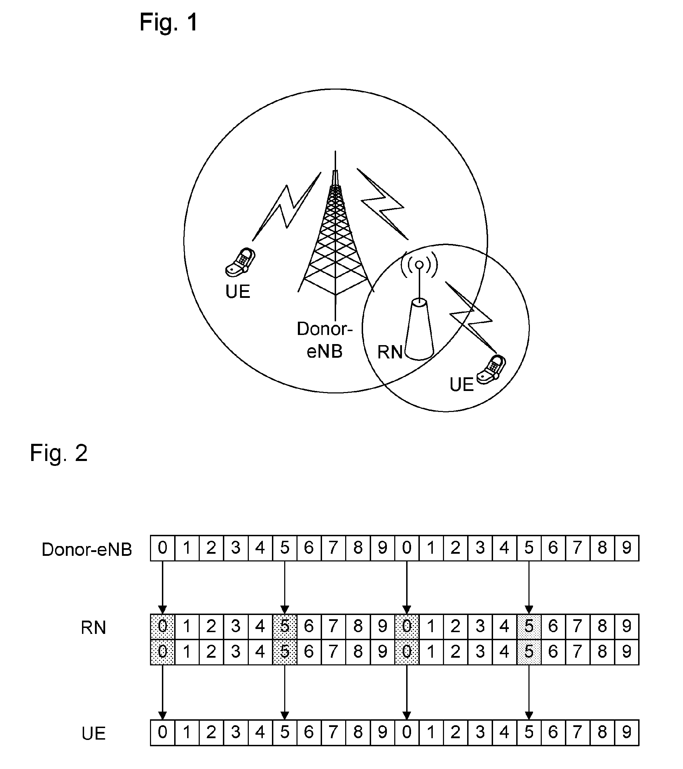

In order to meet the increasing demands on high-bandwidth high-speed mobile access, the Third Generation Partnership Project (3GPP) has proposed a Long-Term Evolution Advanced (LTE-Advanced) standard. Compared with a Long-Term Evolution (LTE), the LTE-Advanced keeps the core of the LTE, and, based on this, adopts a series of technologies to make expansions in frequency domain and spatial domain to improve the utilization ratio of frequency spectrum and increase system capacity and achieve other purposes. Wireless relay technology, one of the technologies used in the LTE-Advanced, aims at expanding the coverage of a cell, decreasing the dead spots in a communication, balancing loads, transferring the services of a hot area and saving the transmitting power of a User Equipment (UE). As shown in Fig. 1, some new Relay-Nodes (RNs) are added between an original Donor-eNB and a UE, and they are wirelessly connected with the Donor-eNB and are not in wired connection with a transmission network, therefore, downlink data first arrives at the Donor-eNB and is then transmitted to the RN and then to the UE via the RN, and for uplink data, the data transmission process is an inverse one. The wireless relay technology shortens the distance between an antenna and the UE, improves the link quality of the UE and consequently improves the frequency spectrum efficiency of the system and the user data rate.

The UE acquires network side information via system information which is an important means for a network side to conduct configuration for a UE. In an LTE system, system information is divided into three parts: a Master Information Block (MIB), a System Information Block 1 (SIB1) and other system information blocks, wherein the other system information blocks refer to the system information blocks except the SIB1, such as a System Information Block 2 (SIB 2), ... , and a System Information Block 11 (SIB11). It is possible to increase more system information if there is still system information required to be sent in future.

The MIB comprises the following three parts: downlink system bandwidth, Physical HARQ Indicator Channel (PHICH) configuration information and System Frame Number (SFN). A Physical Broadcast Channel (PBCH) occupies a fixed time-frequency resource, namely, occupies, in the time domain, the first four Orthogonal Frequency Division Multiplexing (OFDM) symbols in the second time slot of a sub-frame 0, and occupies, in the frequency domain, six Resource Blocks (RBs) (totally 72 sub-carriers) around a central frequency point. The MIB is sent every 10ms, and the MIB is changed every 40ms which is as a sending period of the MIB.

SIB is a concept of a Radio Resource Control (RRC) layer, different SIBs consists of information of different types, the SIB symbols used in the LTE system are currently ranged from SIB1, SIB2, ..., to SIB11 and may be increased continuously. In the LTE, system information are classified and distributed in different SIBs according to the types of different information and the time delay of receiving the system information by a UE.

The SIB1, which comprises cell access information and scheduling information of other SIBs, is always sent in the fifth sub-frame of an even frame in the time domain and dynamically scheduled in the frequency domain. The SIB1 is sent every 20ms, and the SIB1 is changed every 40ms which is as a sending period of the SIB1.

The SIB2 comprises common shared channel information. The SIB3 comprises cell reselection information of a serving cell. The SIB4 comprises the cell reselection information of a neighbor intra-frequency cell. The SIB5 comprises the cell reselection information of a neighbor inter-frequency cell. The SIB6 comprises the cell reselection information of a neighbor Universal Terrestrial Radio Access Network (UTRAN) cell. The SIB7 comprises the cell reselection information at the frequency of a GSM/EDGE Radio Access Network (GERAN). The SIB8 comprises the cell reselection information of a neighbor CDMA2000 cell. The SIB9 comprises a Home NodeB Identity (HNBID). The SIB10 comprises primary Earthquake and Tsunami Warning System (ETWS) information. SIB11 comprises secondary ETWS information. Each SIB above is dynamically mapped to System Information (SI) and carried in the form of a message. Each SI corresponds to a time window (SI window), which is used for distinguishing different SI messages and helping the UE receive a corresponding SI message in the SI window. The mapping relationship between an SI and an SIB, the length of the SI window of the SI and the sending period of the SI are all contained in the SIB1 as scheduling information. Each SIB is mapped to corresponding SI, the network side carries out sending by taking SI message as a unit, and the UE side receives the SI in a corresponding SI window and acquires a corresponding SIB. Each SIB is located in a corresponding SI window in the time domain and is dynamically scheduled in the frequency domain.

In order to guarantee the compatibility to a UE in the current LTE system, an RN transmits system information to the UE according to the aforementioned sending period. If the radio connection between a Donor-eNB and the RN and that between the RN and the UE are functioned at the same frequency band and the radio frame border of the Donor-eNB is synchronously aligned with the radio frame border of the RN, then on the same time-frequency resource, the RN not only needs to receive system information from the Donor-eNB, but also needs to send system information to the UE. For the reason that the antenna isolation level of the RN cannot guarantee the simultaneous receiving and sending of the RN, a conflict occurs when the RN receives and sends system information on the same time-frequency resource. As shown in Fig. 2, each square represents the width (1ms) of a Transmission Time Interval (TTI) in a time sequence. Each radio frame (10ms) comprises 10 sub-frames (1ms) that are numbered from 0 to 9. The radio frame border of the Donor-eNB and the radio frame border of the RN are synchronously aligned. In the sub-frames 0 and 5, the RN not only needs to receive system information from the Donor-eNB but also needs to send system information to the UE, leading to a conflict between system information in the RN.

### SUMMARY

The present invention aims to provide a Relay-Node (RN), a Donor-eNB and a method for the RN to receive and send system information, which avoid a conflict between simultaneously receiving system information by the RN from a Donor-eNB and sending system information to a UE by an RN.

In order to address the technical problem above, the present invention provides a method for a Relay-Node (RN) to receive and send system information, the method comprises:
setting an offset between a radio frame border of the RN and a radio frame border of a Donor-eNB by the Donor-eNB or the RN itself, so that the radio frame border of the RN is staggered from the radio frame border of the Donor-eNB;
receiving and sending system information by the RN according to a sending period specified in a Long Term Evolution (LTE);
so as to avoid a conflict between receiving and sending the system information by the RN.

In the method, after the Donor-eNB sets the offset, the method may further comprise: informing the RN of the offset by the Donor-eNB via the system information or a dedicated signaling.

In the method, the step that the Donor-eNB informs the RN of the offset via the system information may be carried out with one of the following methods:
method 1: the Donor-eNB informs the RN of the offset by adding a field for representing the offset between the radio frame border of the RN and the radio frame border of the Donor-eNB in existing system information block, writing the offset into the field, and sending the system information block to the RN;
method 2: the Donor-eNB informs the RN of the offset by writing the offset into new system information block for transmitting the offset between the radio frame border of the RN and the radio frame border of the Donor-eNB, and sending the new system information block to the RN.

In the method, before the Donor-eNB sends the new system information block to the RN, the method may further comprise:
sending the RN a System Information Block 1 (SIB1) containing scheduling information of the new system information block by the Donor-eNB, wherein the scheduling information comprises SIB-mapping information, a length of an SI window and a sending period; and
receiving the new system information by the RN according to the scheduling information.

In the method, the step that the Donor-eNB informs the RN of the offset via a dedicated signaling may be carried out with one of the following methods:
method 1: the Donor-eNB informs the RN of the offset by adding a field for representing the offset between the radio frame border of the RN and the radio frame border of the Donor-eNB in an existing dedicated signaling, writing the offset into the field, and sending the dedicated signaling to the RN;
method 2: the Donor-eNB informs the RN of the offset by writing the offset into a new dedicated signaling for transmitting the offset between the radio frame border of the RN and the radio frame border of the Donor-eNB, and sending the new dedicated signaling to the RN.

In the method, after the RN sets the offset by itself, the method may further comprise:
informing the Donor-eNB of the offset by the RN via a dedicated signaling; and
after receiving the dedicated signaling, determines a subsequent scheduling sequence by the Donor-eNB according to the offset.

In the method, the step that the RN informs the Donor-eNB of the offset via a dedicated signaling may be carried out with one of the following methods:
method 1: the RN informs the Donor-eNB of the offset by adding a field for representing the offset between the radio frame border of the RN and the radio frame border of the Donor-eNB in an existing dedicated signaling, writing the offset into the field, and sending the dedicated signaling to the Donor-eNB;
method 2: the RN informs the Donor-eNB of the offset by writing the offset into a new dedicated signaling for transmitting the offset between the radio frame border of the RN and the radio frame border of the Donor-eNB, and sending the new dedicated signaling to the Donor-eNB.

In the method, the dedicated signaling may refer to a dedicated signaling for a designated UE or a designated RN.

In order to address the technical problem above, the present invention also provides a method for a Relay-Node (RN) to receive system information, the method comprises:
setting a radio frame border of the RN to be synchronously aligned with a radio frame border of a Donor-eNB by the RN, and receiving, when the RN is powered on initially, system information by the RN according to a sending period specified in an LTE;
when the system information is updated, informing the RN of the system information by the Donor-eNB via a dedicated signaling, and receiving the system information by the RN from the dedicated signaling;
so as to avoid a conflict between receiving and sending the system information by the RN.

In the method, the step that the Donor-eNB informs the RN of the system information via a dedicated signaling and the RN receives the system information from the dedicated signaling may comprise: the Donor-eNB sends the dedicated signaling containing the system information during a BCCH modification period;
after receiving the dedicated signaling, the RN receives the system information from the dedicated signaling and updates, according to the dedicated signaling, the system information from a starting border of a next BCCH modification period.

In the method, the dedicated signaling may be set to contain only the updated system information, or contain both the updated system information and the system information which is not updated.

In the method, the dedicated signaling may refer to a dedicated signaling for a designated UE or a designated RN.

In order to address the technical problem above, the present invention further provides a Relay-Node (RN) for receiving and sending system information, the RN comprises a receiving unit and a sending unit, wherein
an offset exists between a radio frame border of the RN and a radio frame border of a Donor-eNB;
the receiving unit is configured to receive system information sent by the Donor-eNB according to a sending period specified in an LTE and radio frame information of the Donor-eNB;
the sending unit is configured to send system information to a User Equipment (UE) according to a sending period specified in the LTE and radio frame information of the RN;
so as to avoid a conflict between receiving and sending the system information by the RN.

In order to address the technical problem above, the present invention also provides a Relay-Node (RN) for receiving system information, wherein a radio frame border of the RN is synchronously aligned with a radio frame border of a Donor-eNB, and the RN comprises a receiving unit and a system information reading unit, wherein
the receiving unit is configured to receive a dedicated signaling sent by the Donor-eNB;
the system information reading unit is configured to read updated system information from the dedicate signaling received by the receiving unit;
so as to avoid a conflict between receiving and sending the system information by the RN.

The RN may further comprise an update unit which is configured to update the system information from a starting border of a next BCCH modification period after the system information reading unit reads the updated system information from the dedicated signaling.

In order to address the technical problem above, the present invention further provides a Donor-eNB for sending system information, the Donor-eNB comprise a determining unit and a sending unit, wherein
the determining unit is configured to inform the sending unit of an update of system information when the determining unit determines that the system information is updated;
the sending unit is configured to send, when the system information is updated, a dedicated signaling containing the updated system information to the Relay-Node (RN);
so as to avoid a conflict between receiving and sending the system information by the RN.

The present invention is capable of perfectly addressing the conflict between simultaneously receiving and sending system information by an RN, takes into full consideration the influence caused by the incapacity of the RN for receiving and sending system information at the same frequency band, and prevents the RN from receiving and sending system information simultaneously by the following mode: staggering the sub-frame for receiving system information by the RN from that for sending system information by the RN, or changing the transmission mode of the system information.

### BRIEF DESCRIPTION OF THE DRAWINGS

Fig. 1 is a schematic diagram illustrating the network structure using a wireless relay technology;
Fig. 2 is a schematic diagram illustrating a conflict between simultaneously receiving and sending system information by an RN;
Fig. 3 is a schematic diagram illustrating an embodiment 1 of the present invention;
Fig. 4 is a schematic diagram illustrating an embodiment 2 of the present invention;
Fig. 5 is a schematic diagram illustrating an embodiment 3 of the present invention;
Fig. 6 is a schematic diagram illustrating an embodiment 4 of the present invention.

### DETAILED DESCRIPTION

In the present invention, there exist three technical solutions:
technical solution 1: a Donor-eNB sets an offset of a radio frame border of an RN for the RN so that the radio frame border of the RN and the radio frame border of the Donor-eNB are staggered from each other; and the RN receives and sends system information according to a sending period specified in an LTE;
technical solution 2: an RN sets an offset of a radio frame border for itself so that the radio frame border of the RN and the radio frame border of a Donor-eNB are staggered from each other; and the RN receives and sends system information according to a sending period specified in an LTE;
technical solution 3: the radio frame border of an RN and the radio frame border of a Donor-eNB are set to be synchronously aligned with each other; when initially powered on, the RN reads system information according to a sending period specified in an LTE; when the system information is updated, the Donor-eNB informs the RN of the system information via a dedicated signaling; and the RN reads the system information from the dedicated signaling.

Specifically, when initially powered on, the RN reads the system information according to the sending period specified in the LTE, and after the RN is initially powered on, the Donor-eNB informs the RN of the system information via a dedicated signaling when the system information is updated, and the RN reads the system information only from the dedicated signaling.

The dedicated signaling refers to a dedicated signaling for a designated UE or a designated RN.

The technical solutions above are capable of avoiding the conflict between receiving and sending the system information by the RN.

"The offset of the radio frame border of the RN" herein or "the offset of a radio frame border" herein refers to the offset of the radio frame border of the RN in relative to the radio frame border of the Donor-eNB.

The present invention is explained below in detail by reference to accompanying drawings in combination with specific embodiments.

### Embodiment 1 using technical solution 1

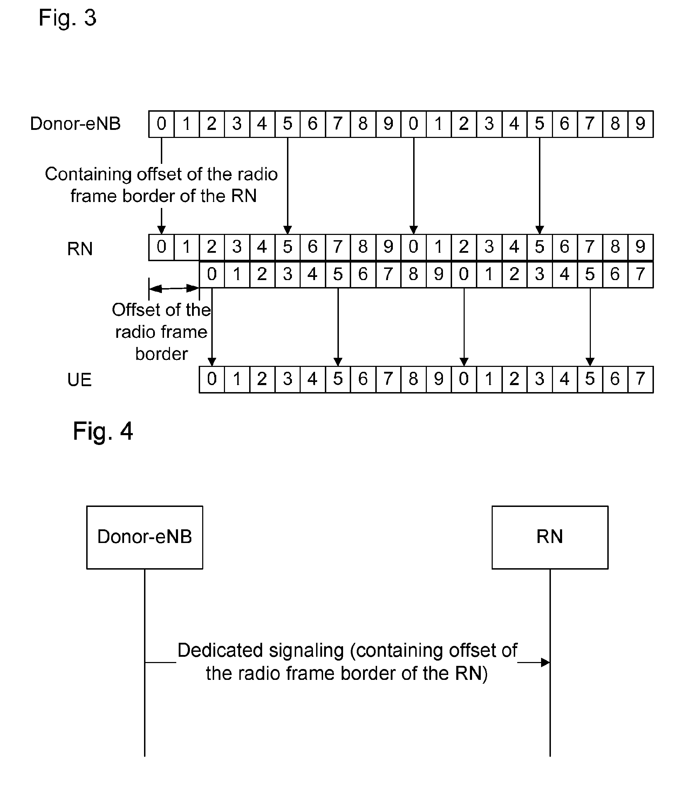

Fig. 3 illustrates how to utilize the present invention to avoid the conflict between simultaneously receiving and sending system information by an RN.

In this figure, each square represents a TTI width (1 ms) in a time sequence. Each radio frame (10ms) comprises 10 sub-frames (1 ms) that are numbered from 0 to 9.

The Donor-eNB informs the RN of the offset of the radio frame border of the RN via system information.

The RN receives the system information containing the offset of the radio frame border of the RN, determines its own radio frame border, and receives and sends system information according to a sending period specified in the LTE.

In this way, the RN receives and sends the system information in the staggered time domains to avoid a conflict between simultaneously receiving and sending the system information.

The system information may be formed by adding a field for representing an offset of a radio frame border in existing system information or may be new system information defined for transmitting an offset of a radio frame border, that is to say, the Donor-eNB informs the RN of the offset of the radio frame border of the RN via the system information with one of the following methods:
method 1: the Donor-eNB informs the RN of the offset of the radio frame border of the RN by adding a field for representing the offset of a radio frame border in existing system information, writing the offset of the radio frame border of the RN into the field, and sending the system information to the RN;
method 2: the Donor-eNB informs the RN of the offset of the radio frame border of the RN by writing the offset of the radio frame border of the RN into new system information for transmitting the offset of a radio frame border and sending the new system information to the RN.

The scheduling information of the new system information is contained in the SIB1 sent by the Donor-eNB and comprises SIB-mapping information, the length of an SI window and the sending period. Specifically, before sending the new system information to the RN, the Donor-eNB sends the RN a System Information Block 1 (SIB1) containing the scheduling information of the new system information, wherein the scheduling information comprises SIB-mapping information, the length of an SI window and the sending period; and the RN receives the new system information according to the scheduling information.

### Embodiment 2 using technical solution 1

As shown in Fig. 4, the Donor-eNB informs the RN of the offset of the radio frame border of the RN via a dedicated signaling;
the RN receives the dedicated signaling containing the offset of the radio frame border of the RN, determines its own radio frame border, and receives and sends the system information according to the sending period specified in the LTE.

In this way, the RN receives and sends the system information in the staggered time domains to avoid a conflict between simultaneously receiving and sending the system information.

The dedicated signaling refers to a dedicate signaling for a designated UE or a designated RN and may be formed by adding a field for representing an offset of a radio frame border in an existing dedicated signaling or may be a new dedicated signaling defined for transmitting an offset of a radio frame border, that is to say, the Donor-eNB informs the RN of the offset of the radio frame border of the RN via the dedicated signaling with one of the following methods:
method 1: the Donor-eNB informs the RN of the offset of the radio frame border of the RN by adding a field for representing an offset of a radio frame border in an existing dedicated signaling , writing the offset of the radio frame border of the RN into the field, and sending the dedicated signaling to the RN;
method 2: the Donor-eNB informs the RN of the offset of the radio frame border of the RN by writing the offset of the radio frame border of the RN into a new dedicated signaling for transmitting an offset of a radio frame border and sending the new dedicated signaling to the RN.

Embodiment 3 using technical solution 2

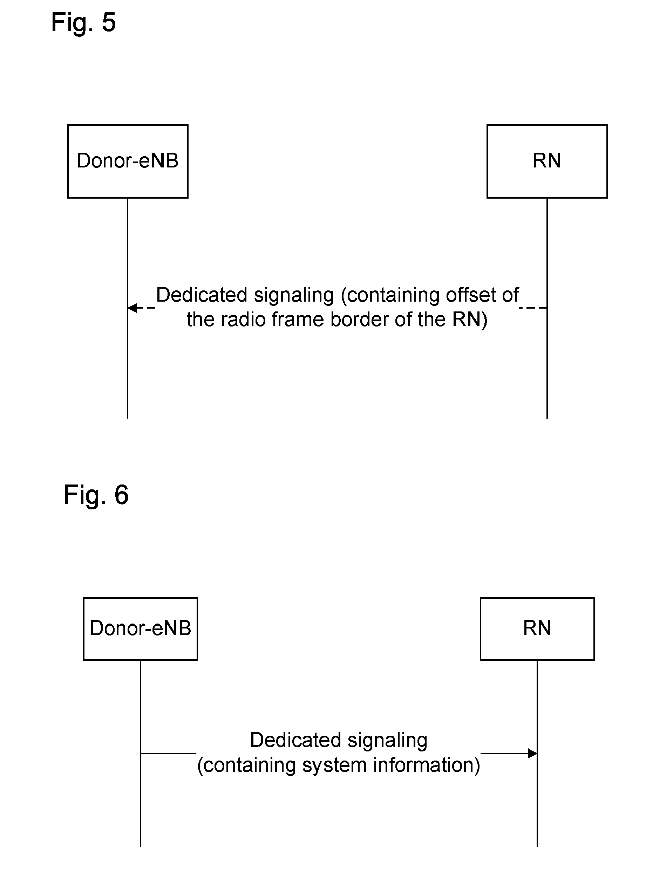

The RN presets an offset of a radio frame border for itself;
as shown in Fig. 5, the RN informs the Donor-eNB of the offset of the radio frame border via a dedicated signaling;
after receiving the dedicated signaling, the Donor-eNB determines the subsequent scheduling sequence according to the offset of the radio frame border of the RN (that is, the Donor-eNB re-determines the sending time of the system information).

The dedicated signaling refers to a dedicate signaling for a designated UE or a designated RN and may be formed by adding a field for representing an offset of a radio frame border in an existing dedicated signaling or may be a new dedicated signaling defined for transmitting an offset of a radio frame border, that is to say, the RN informs the Donor-eNB of the offset of the radio frame border via the dedicated signaling with one of the following methods:
method 1: the RN informs the Donor-eNB of the offset of the radio frame border by adding a field for representing an offset of a radio frame border in an existing dedicated signaling, writing the offset of the radio frame border into the field, and sending the dedicated signaling to the Donor-eNB;
method 2: the RN informs the Donor-eNB of the offset of the radio frame border by writing the offset of the radio frame border into a new dedicated signaling for transmitting an offset of a radio frame border and sending the new dedicated signaling to the Donor-eNB.

Certainly, the RN may inform the Donor-eNB of the offset of the radio frame border with other methods, and the present invention is not limited hereto.

The offset of the radio frame border mentioned in embodiments 1, 2 and 3 takes sub-frame as a unit, and it should be guaranteed that the offset is not multiple of the length of the radio frame.

Furthermore, in embodiments 1, 2 and 3, the offset of the radio frame for one RN may be the same as or different from that for another RN.

The RN mentioned in embodiments 1, 2 and 3 comprises a sending unit and a receiving unit, wherein
an offset exists between the radio frame border of the RN and the radio frame border of a Donor-eNB;
the receiving unit is configured to receive the system information sent by the Donor-eNB according to a sending period specified in the LTE and the radio frame information of the Donor-eNB;
the sending unit is configured to send the system information to a User Equipment (UE) according to a sending period specified in the LTE and the radio frame information of the RN;
so as to avoid a conflict between receiving and sending system information by the RN.

The radio frame information comprises radio frame number and sub-frame number.

### Embodiment 4 using technical solution 3

The RN sets its radio frame border to be synchronously aligned with the radio frame border of a Donor-eNB and reads, when initially powered on, system information according to a sending period specified in the LTE.

In order to avoid a conflict, as shown in Fig.6, the RN no longer monitors the system information subsequently, the Donor-eNB informs the RN of the system information via a dedicated signaling when the system information is updated, and the RN reads the system information only from the dedicated signaling after being initially powered on.

The Donor-eNB sends the dedicated signaling during a BCCH (Broadcast Control Channel) modification period. After receiving the dedicated signaling, the RN updates, according to the dedicated signaling, system information from the starting border of the next BCCH modification period (that is, the RN replaces the original system information), wherein the BCCH modification period is contained in the system information.

The dedicated signaling refers to a dedicated signaling for a designated UE or a designated RN and may contain only the updated system information or contain all the system information (including both the updated system information and the system information which is not updated).

In embodiment 4, the radio frame border of the RN and the radio frame border of the Donor-eNB are synchronously aligned with each other, and the RN comprises a receiving unit and a system information reading unit, wherein
the receiving unit is configured to receive a dedicated signaling sent by the Donor-eNB;
the system information reading unit is configured to read the updated system information from the dedicate signaling received by the receiving unit;
so as to avoid a conflict between receiving and sending the system information by the RN.

Preferably, the receiving unit is configured to receive the dedicated signaling sent by the Donor-eNB after the RN is initially powered on and to receive the system information sent by the Donor-eNB when the RN is initially powered on, and the system information reading unit is configured to read the updated system information from the dedicate signaling received by the receiving unit after the RN is initially powered on.

Preferably, the RN further comprises an update unit which is configured to update the system information from the starting border of the next BCCH modification period after the system information reading unit reads the updated system information from the dedicated signaling.

The Donor-eNB mentioned in embodiment 4 comprises a determining unit and a sending unit, wherein
the determining unit is configured to inform the sending unit of an update of system information when the determining unit determines that the system information is updated;
the sending unit is configured to send, when the system information is updated, a dedicated signaling containing the updated system information to the RN;
so as to avoid a conflict between receiving and sending the system information by the RN.

Preferably, the determining unit is further configured to inform the sending unit of the completion of power-on after the RN is initially powered on, and the sending unit is configured to send, when the system information is updated, a dedicated signaling containing the updated system information to the RN after the RN is initially powered on.

Of course, the present invention may have many other embodiments, various modifications and variations can be devised by those skilled in the art without departing from the essence of the present invention, and it should be understood that these modifications and variations shall belong to the protection scope of the appended claims of the present invention.

### INDUSTRIAL APPLICABILITY

The present invention is capable of perfectly addressing the conflict between simultaneously receiving and sending system information by an RN, takes into full consideration the influence caused by the incapacity of the RN for receiving and sending system information at the same frequency band, and prevents the RN from receiving and sending system information simultaneously by the following mode: staggering the sub-frame for receiving system information by the RN from that for sending system information by the RN, or changing the transmission mode of the system information.

## Claims

1. A method for a Relay-Node (RN) to receive and send system information, comprising:
setting an offset between a radio frame border of the RN and a radio frame border of a Donor-eNB by the Donor-eNB or the RN itself, so that the radio frame border of the RN is staggered from the radio frame border of the Donor-eNB;
receiving and sending system information by the RN according to a sending period specified in a Long Term Evolution (LTE);
so as to avoid a conflict between receiving and sending the system information by the RN.

2. The method according to claim 1, after the Donor-eNB sets the offset, the method further comprising: informing the RN of the offset by the Donor-eNB via the system information or a dedicated signaling.

3. The method according to claim 2, wherein
the step that the Donor-eNB informs the RN of the offset via the system information is carried out with one of the following methods:
method 1: the Donor-eNB informs the RN of the offset by adding a field for representing the offset between the radio frame border of the RN and the radio frame border of the Donor-eNB in existing system information block, writing the offset into the field, and sending the system information block to the RN;
method 2: the Donor-eNB informs the RN of the offset by writing the offset into new system information block for transmitting the offset between the radio frame border of the RN and the radio frame border of the Donor-eNB, and sending the new system information block to the RN.

4. The method according to claim 3, before the Donor-eNB sends the new system information block to the RN, the method further comprising:
sending the RN a System Information Block 1 (SIB1) containing scheduling information of the new system information block by the Donor-eNB, wherein the scheduling information comprises SIB-mapping information, a length of an SI window and a sending period; and
receiving the new system information block by the RN according to the scheduling information.

5. The method according to claim 2, wherein
the step that the Donor-eNB informs the RN of the offset via a dedicated signaling is carried out with one of the following methods:
method 1: the Donor-eNB informs the RN of the offset by adding a field for representing the offset between the radio frame border of the RN and the radio frame border of the Donor-eNB in an existing dedicated signaling, writing the offset into the field, and sending the dedicated signaling to the RN;
method 2: the Donor-eNB informs the RN of the offset by writing the offset into a new dedicated signaling for transmitting the offset between the radio frame border of the RN and the radio frame border of the Donor-eNB, and sending the new dedicated signaling to the RN.

6. The method according to claim 1, after the RN sets the offset by itself, the method further comprising:
informing the Donor-eNB of the offset by the RN via a dedicated signaling; and
after receiving the dedicated signaling, determines a subsequent scheduling sequence by the Donor-eNB according to the offset.

7. The method according to claim 6, wherein
the step that the RN informs the Donor-eNB of the offset via a dedicated signaling is carried out with one of the following methods:
method 1: the RN informs the Donor-eNB of the offset by adding a field for representing the offset between the radio frame border of the RN and the radio frame border of the Donor-eNB in an existing dedicated signaling, writing the offset into the field, and sending the dedicated signaling to the Donor-eNB;
method 2: the RN informs the Donor-eNB of the offset by writing the offset into a new dedicated signaling for transmitting the offset between the radio frame border of the RN and the radio frame border of the Donor-eNB, and sending the new dedicated signaling to the Donor-eNB.

8. The method according to any one of claims 5-7, wherein
the dedicated signaling refers to a dedicated signaling for a designated UE or a designated RN.

9. A method for a Relay-Node (RN) to receive system information, comprising:
setting a radio frame border of the RN to be synchronously aligned with a radio frame border of a Donor-eNB by the RN, and receiving, when the RN is powered on initially, system information by the RN according to a sending period specified in an LTE;
when the system information is updated, informing the RN of the system information by the Donor-eNB via a dedicated signaling, and receiving the system information by the RN from the dedicated signaling;
so as to avoid a conflict between receiving and sending the system information by the RN.

10. The method according to claim 9, wherein
the step that the Donor-eNB informs the RN of the system information via a dedicated signaling and the RN receives the system information from the dedicated signaling comprises: the Donor-eNB sends the dedicated signaling containing the system information during a BCCH modification period;
after receiving the dedicated signaling, the RN receives the system information from the dedicated signaling and updates, according to the dedicated signaling, the system information from a starting border of a next BCCH modification period.

11. The method according to claim 9 or 10, wherein
the dedicated signaling is set to contain only the updated system information, or contain both the updated system information and the system t information which is not updated.

12. The method according to claim 9 or 10, wherein
the dedicated signaling refers to a dedicated signaling for a designated UE or a designated RN.

13. A Relay-Node (RN) for receiving and sending system information, comprising a receiving unit and a sending unit, wherein
an offset existing between a radio frame border of the RN and a radio frame border of a Donor-eNB;
the receiving unit being configured to receive system information sent by the Donor-eNB according to a sending period specified in an LTE and radio frame information of the Donor-eNB;
the sending unit being configured to send system information to a User Equipment (UE) according to a sending period specified in the LTE and radio frame information of the RN;
so as to avoid a conflict between receiving and sending the system information by the RN.

14. A Relay-Node (RN) for receiving system information, wherein a radio frame border of the RN being synchronously aligned with a radio frame border of a Donor-eNB, and the RN comprising a receiving unit and a system information reading unit, wherein
the receiving unit being configured to receive a dedicated signaling sent by the Donor-eNB;
the system information reading unit being configured to read updated system information from the dedicate signaling received by the receiving unit;
so as to avoid a conflict between receiving and sending the system information by the RN.

15. The RN according to claim 14, further comprising:
an update unit, configured to update the system information from a starting border of a next BCCH modification period after the system information reading unit reads the updated system information from the dedicated signaling.

16. A Donor-eNB for sending system information, comprising a determining unit and a sending unit, wherein
the determining unit being configured to inform the sending unit of an update of system information when the determining unit determines that the system information is updated;
the sending unit being configured to send, when the system information is updated, a dedicated signaling containing the updated system information to the Relay-Node (RN);
so as to avoid a conflict between receiving and sending the system information by the RN.
